# EUROPEAN PATENT SPECIFICATION

(11) **EP 3 816 024 B1**
(45) Date of publication and mention of the grant of the patent: **25.10.2023**
(21) Application number: 19826853.4
(22) Date of filing: 20.06.2019
(51) Int. Cl.: B62K 1/00, B62K 11/00, B62K 25/04, B62J 25/04

(54) **ELECTRIC UNICYCLE**
ELEKTRISCHES EINRAD
MONOCYCLE

(30) Priority: 28.06.2018 RU 2018123622
(43) Date of publication of application: 05.05.2021
(73) Proprietor: Butenko, Mark Valerevich, Smolenskaya obl., g. Gagarin, 215010 (RU)
(72) Inventor: Butenko, Mark Valerevich, Smolenskaya obl., g. Gagarin, 215010 (RU)
(74) Representative: Plavsa & Plavsa D.O.O
(86) International application number: PCT/RU2019/000436
(87) International publication number: WO 2020/005110

(56) References cited:
- CN-A- 108 163 118
- CN-U- 204 250 249
- RU-C1- 2 570 513
- US-A1- 2011 067 937
- US-A1- 2011 220 427
- US-B1- 9 796 444

## Description

### Field of the invention

The object of the present invention is a unicycle comprising a wheel portion, an electrical portion, a first shock absorber, a second shock absorber, a frame portion and a casing.

### Background of the invention

Known from the prior art is a unicycle device (patent US8807250, published on August 19, 2014), consisting of a wheel portion, foot platforms, a gyroscopic sensor, a battery, a motor and a casing. The wheel portion comprises a frame, two footrests, a gyroscopic sensor, a battery, a motor, two guide wheels and one drive wheel, a rim and a tire. The frame is made in the shape of a three-beam star, at each end of the two beams of the frame there is attached one guide wheel, and at the end of the third beam there is attached a drive wheel connected to the engine. Thereby, one (vertical) beam of the frame is made as a guide, along which a section of rectangular profile pipe is moved, which section is connected to the guide using a spring and which accommodates the footrests. The guide, the section of rectangular profile pipe and the spring act together as a shock absorber for the footrests. A gyroscopic sensor, battery, and motor are also attached to the frame. The frame and the elements attached thereto do not rotate relative to the axis of the unicycle. The rim with a tire is driven by a motor through a drive wheel due to friction, the guide wheels provide a certain position (along the axis of the unicycle) of the rim with a tire relative to the frame.

The drawback of said technical solution is the low reliability of the design. It is caused by the fact that foreign microparticles (such as dust) penetrating into the contact areas of the elements (between the drive and guide wheels and the rim, and between the section of rectangular profile pipe and the guide) increase the probability of failure as a result of wear of the contacting elements or jamming thereof.

The most common unicycles, where the rim with the tire is driven by the interaction of permanent magnets disposed on the rim and electromagnets disposed on the rigid (relative to the axis) portion of a unicycle. The basic structure of such unicycles is known from the state of the art (for example, https://sunwheel.ru/info/infol.html, accessed on November 21, 2017). For example, known is a unicycle (https://www.popmech.ru/gadgets/257992-razbiraem-monokoleso-airwheel-kak-eto-rabotaet/, accessed on November 21, 2017) mainly consisting of: a wheel portion, footrests, casing, battery, and gyroscopic sensor. The wheel portion consists of a rigid axis, which accommodates a stator with electromagnets, which stator is disposed inside the rim with permanent magnets and a tire; the axis further accommodates covers via bearings and footrests via brackets. The housing is also attached onto the axis.

The drawback of this technical solution is insufficient safety when using the unicycle, caused by the rigid connection of the footrests to the axis. When the user on the unicycle travels over an uneven surface, as a result of the rigid connection of the footrests to the axis, vibrations are almost completely transmitted to the footrests on which the user stands. As a result, the user is more likely to fall off the unicycle.

A publication (https://ecodrift.ru/wiki-article/obzor-monokolesa-gotway-mcm3-s-amortizatorami-krovat-na-pruzhinah/, accessed on November 21, 2017) discloses a unicycle in which the footrests are movably connected to stationary (relative to the axis) portions of the unicycle. Each of the footrests is attached to the casing by means of a four-bar linkage and two springs. CN 204 250 249 U discloses a unicycle according to the preamble of claim

The disadvantage of the known technical solution is insufficient safety of using the unicycle, caused by the lack of a rigid connection between the footrests. When the user travels on the unicycle over an uneven surface, the springs of each of the footrests act separately from each other. As a result, the footrests on which the user stands when the unicycle is tilted to the side (when turning) move relative to the casing in a different manner, and, consequently, the user is more likely to fall off the unicycle.

The technical result of the proposed invention is to increase the safety of using the unicycle.

### Disclosure of the invention

A unicycle comprising a wheel portion, an electrical portion, a first shock absorber, a second shock absorber, a frame portion and a casing, the first shock absorber comprising a cylinder corresponding to the first shock absorber, a rod corresponding to the first shock absorber, and a first piston, the second shock absorber comprising a cylinder corresponding to the second shock absorber, a rod corresponding to the second shock absorber, and a second piston, each of the cylinders being provided with a cavity plugged from both ends thereof, the first piston being installed in the cylinder cavity of the first shock absorber, and the second piston being installed in the cylinder cavity of the second shock absorber, the corresponding rod with one end thereof being connected to the first piston, and the other corresponding rod with one end thereof being connected to the second piston, the other end of each of the rods being disposed outside the cylinder corresponding thereto according to the invention is characterized by the wheel portion comprising an axis, a hub, a ring, a rim with permanent magnets, a tire, two covers, and two bearings, the electrical portion comprising a control unit, a control panel, a battery, electromagnets, a gyroscopic sensor and a position sensor, the frame portion comprising a frame comprising a crossbar and two side portions, and two footrests, wherein the hub is attached onto the axis and rigidly connected to the ring, which is installed inside the rim with a gap therefrom, the axis, hub, ring, rim and bearings are installed coaxially, and the tire is disposed on the rim, the covers are attached to the axis from opposite sides of the hub by means of the two bearings and are attached to the rim, wherein the control unit is electrically connected to the control panel, electromagnets, battery, gyroscopic sensor and position sensor, the electromagnets are disposed on the ring, the gyroscopic sensor is disposed stationary relative to the casing, and the position sensor is attached to the ring and configured to determine the position of the rim relative to the ring, wherein a portion of the cylinder cavity of the first shock absorber, disposed on the side of the rod thereof, is filled with shock absorbing gas, and a portion of the cylinder cavity of the second shock absorber, disposed on the side of the rod thereof, is filled with shock absorbing liquid, wherein the second piston is configured to pass the flow of shock absorbing liquid, each of the cylinders is attached rigidly relative to the axis, and each rod is connected to the frame portion, the side portions are disposed on opposite sides of the wheel portion and from one side thereof are connected to each other by the crossbar, and from the other side, each of them is connected to the corresponding footrest thereof, wherein the casing is rigidly attached to the axis and partially encompasses the wheel portion.

Preferably the hub is rigidly connected to the ring by means of spokes.

Preferably the hub is rigidly connected to the ring by means of a disk disposed coaxially to the axis.

Preferably the disk is made solid.

Preferably the disk is made with holes.

Preferably the first shock absorber and the second shock absorber are disposed such that the rods are oriented towards the surface being travelled over.

Preferably the first shock absorber and the second shock absorber are disposed such that the rods are oriented away from the surface being travelled over.

Preferably the frame, the first shock absorber and the second shock absorber are disposed inside the casing.

Preferably the frame is disposed outside the casing, and the first shock absorber and the second shock absorber are disposed inside the casing.

Preferably the frame, the first shock absorber and the second shock absorber are disposed outside the casing.

### Example

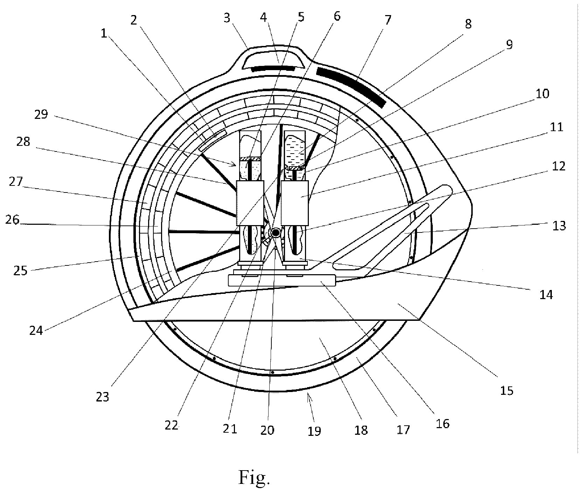

The drawing shows: a gyroscopic sensor 1, control unit 2, handle 3, control panel 4, shock absorbing gas 5, first piston 6, battery 7, shock absorbing liquid 8, second piston 9, cylinder 10, bracket 11, rod 12, frame 13, housing 14, casing 15, footrest 16, tire 17, cover 18, wheel portion 19, axis 20, bearing 21, hub 22, second shock absorber 23, ring 24, rim 25, electromagnet 26, permanent magnet 27, spoke 28, first shock absorber 29.

The main elements of the device are as follows: a wheel portion 19; two shock absorbers: the first shock absorber 29 and the second shock absorber 23 (together referred to as shock absorbers); a frame 13; two footrests 16, and the casing 15.

The wheel portion 19 is a complex device generally of a circular shape, consisting of, inter alia, an element (a set of elements) that can freely rotate around the axis of the device. The wheel portion 19 can in this embodiment be conditionally divided into an external movable (rotatable relative to the axis) portion and an internal stationary (stationary relative to the axis) portion.

The movable portion of the structure consists of the following elements: a tire 17, rim 25, permanent magnets 27 and two covers 18.

The basis of the external movable portion of the wheel portion is the rim 25. The rim 25 is similar in shape to the ring, whose cross-section is optimized at least to accommodate the tire 17. The tire 17 is put onto the external side of the rim 25 (facing away from the axis of this circular shape, coinciding with the axis of the rim). The tire 17, in this embodiment, is a rubber hoop or a special shell filled with compressed air, that is put onto the rim 25 to increase shock absorption and improve movement (as defined in https://dic.academic.ru/dic.nsf/es/65095/ 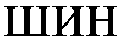 a, accessed on November 07, 2017). On the rim 25 on the internal side thereof (opposite to the outer side thereof and facing the axis of the rim 25) there are installed (or attached thereto) permanent magnets 27. A corresponding cover 18 is attached to each of the sides of the rim 25. The covers 18 are disc-shaped or plate-shaped. Each cover 18 in the center thereof has a special hole in which a bearing 21 is installed (for example, a rolling or sliding bearing). The covers 18 are disposed on opposite sides of the rim 25, to which they are attached along the entire edge thereof using, for example, fasteners. Thus, the rim 25 with the covers 18 attached thereto forms a structure with a cavity inside. In said cavity there is disposed the internal stationary portion of the wheel portion 19.

The internal stationary portion of the wheel portion 19 consists of the axis 20, hub 22, spokes 28 (or disk), ring 24, and electromagnets 26.

The axis 20 is a rod, typically of a circular cross-section, which can be provided with a through hole disposed along the axis of the rod. In the middle portion of the axis 20 there can also be made a hole perpendicular to the axis of the rod. The combination of two said holes enables the wires to be output from the internal stationary portion of the wheel portion 19 to the casing 15. The axis 20 is attached in the bearings 21 of the covers 18, wherein the free ends of the axis 20 are disposed outside the area between the covers 18. Onto the axis 20, in the middle portion thereof (along the length), there is attached the hub 22. If necessary, between the axis 20 and the hub 22 there can be further included a bushing, rigidly connected to both the axis 20 and the hub 22. The hub 22 is coaxial to the ring 24, having a diameter that is greater than that of the hub 22, and connected thereto by the spokes 28 or a disk (solid or with holes). As used herein, the spoke 28 refer to a rod connecting the hub 22 of the wheel with the ring 24 (in accordance with par. 2 of the Encyclopedic dictionary, https://dic.academic.ru/dic.nsf/es/145675/c 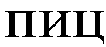 a, accessed on November 17, 2017). On the outer surface (or in recesses on this surface) of the ring 24, facing away from the axis of the ring 24, there are attached the electromagnets 26. The dimensions of the ring 24 are selected such that between the electromagnets 26 of the stationary portion and the permanent magnets 27 of the movable portion there is provided the least gap, which ensures the rotation of the movable portion relative to the stationary one. Further, on the ring 24 (on the side surface thereof or internal surface thereof facing the axis) there can be disposed a control unit 2, which enables the device elements to be controlled, one or more gyroscopic sensors 1 (one, two, three or more), as well as a position sensor.

The gyroscopic sensor 1 is a device comprising of a gyroscope that determines the position of the device or changes in the position, and transmits the position data (position change data) to a processing unit 2 for further use. A gyroscope (one of the types thereof) is a mechanical device with several degrees of freedom in the form of a gimbal and rapidly rotating therein a heavy disk (rotor), wherein the axis of rotation of the disk tends to maintain the position thereof unchanged in space during any turns and movements of the device due to precession (in accordance with the Great polytechnic encyclopedia, https://polytechnic_dictionary.academic.ru/442/Γ 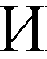 POCκOΠ, accessed on November 14, 2017). There are further other types of gyroscopes, for example, optical gyroscopes. For the device being disclosed, the specific design of the gyroscopic sensor 1 may be different.

A position sensor is an element, which in this device determines the position of the movable portion relative to the stationary portion. As a position sensor, a Hall sensor can be used, which in general is a magnetic-electric semiconductor device, whose operation is based on the use of a galvanomagnetic effect, i.e. the Hall Effect (for information about the Hall sensor see the Polytechnic terminology dictionary https://technical_terminology.academic.ru/850/ 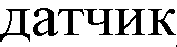 _Xo 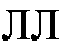 a, and on http://krutimotor.ru/ustrojstvo-datchika-xolla/, accessed on June 22, 2018).

Generally, the permanent magnets and electromagnets together with the control unit and the position sensor make a stepping motor, the application of which is mostly preferred in the subject device because of the high accuracy of rotation of the movable portion relative to the stationary portion, and, consequently, the high controllability of the device.

A shock absorber is a device used in structures to damp oscillations, vibrations, shocks, and impulse loads (as defined in Bolshaya Politechnicheskaya encyclopedia, 2011, article "Shock absorber" https://polytechnic_dictionary.academic.ru/65AMOPT 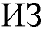 ATOP, accessed on October 04, 2017). A telescopic shock absorber is a shock absorber, where one group of parts is able to make translational movements along the shock absorber's symmetry axis relative to the other group of parts of said shock absorber.

The device comprises two shock absorbers, which are different in design, as follows: a first shock absorber 29 and a second shock absorber 23, installed symmetrically relative to the wheel portion 19 or on one side thereof to reduce the overall dimensions of the device.

Thereby, the first shock absorber 29 and the second shock absorber 23 can also be made telescopic (such configuration will be described below).

The first shock absorber 29 is an element that provides damping of vibrations due to compression or expansion of a shock absorbing gas 5. The first shock absorber 29 consists of a corresponding cylinder 10, a first piston 6 and a corresponding rod 12.

The cylinder 10 in this embodiment is a hollow (i.e. the cylinder 10 is provided with a cavity) element of a circular shape, plugged on both sides and elongated along the axis. The cylinder 10 consists of a side wall and two end walls, which are interconnected. The end walls are a disc-shaped element disposed perpendicular to the shock absorber's axis. The side wall is a round-cylindrical shell, whose ends are plugged by the end walls. One of the end walls has a hole for accommodating the rod 12, said hole is provided with a seal that prevents the flow of media through said hole.

The first piston 6 is a disc-shaped element disposed perpendicular to the axis of the cylinder 10 (and, consequently, of the first shock absorber 29) and configured to travel along the axis of the cylinder 10. The first piston 6 fits tightly with the edges to the internal side of the side wall. The first piston 6 is attached to one of the ends of the rod 12. The first piston 6 divides the cylinder cavity 10 into two non-communicating portions, one of which is filled with the shock absorbing gas 5 under the necessary pressure. The pressure value is determined by the maximum height of the obstacle to be overcome on the surface being travelled over, and by the weight of the user of the device. The shock absorbing gas 5 is understood to refer to a gas that is used in shock absorbers to absorb the energy of oscillations, vibrations, etc.

The rod 12 is typically a metal bar. The rod 12 is disposed coaxially to the symmetry axis of the first shock absorber 29 and extends into the sealed hole in the end wall of the cylinder 10. The rod 12 with one portion thereof is typically disposed inside that portion of the cylinder 10, which is filled with the shock absorbing gas 5. The other portion of the rod 12, intended for attaching the cushioned element, is disposed outside the cylinder 10 and can be enclosed by a housing 14 (at least partially). The housing 14, in this embodiment, is a round-cylindrical shell, whose one end is closed by a wall having a hole (through which the rod 12 can extend provided that the rod 12 is also partially disposed outside the cylinder 10 and the housing 14). The housing 14 with one portion thereof is connected to the cylinder 10. A portion of the rod 12 is disposed in the cavity of the housing 14 and configured to connect the corresponding portion of the cushioned element to the free end of the rod 12.

The first shock absorber 29 is rigidly attached onto the axis 20, for example, by means of a bracket 11. Thereby, the first shock absorber 29 is disposed such that when running over a protruding obstacle, the shock absorbing gas 5 is compressed. The first shock absorber 29 is typically oriented with the end of the rod 12, attached to the cushioned element, to the surface being travelled over, and the shock absorbing gas 5 is disposed under the first piston 6. In other words, the shock absorbing gas 5 is disposed in that portion of the cavity of the cylinder 10, in which the rod 12 is partially disposed. Such orientation provides a more stable user position on the device due to the center of gravity of the user on the device being closer to the surface. However, if necessary, the rod 12 can be oriented away from the surface. The definitions vertical, horizontal, top, bottom, and similar are hereinafter given according to the direction of gravity in the object's position under typical use thereof.

The bracket 11, according to this embodiment, consists of two cylindrical elements and two elongated elements. Each elongated element can be a metal plate, elongated in length, or a corner. Each elongated element with one portion thereof is rigidly attached onto one of the free ends of the axis 20 of the wheel portion 19. The other portion of the elongated element is connected to or configured integral to the corresponding cylindrical element. One cylindrical element is a round-cylindrical shell elongated along the axis thereof, with open ends. This cylindrical element encompasses, with attachment of, the lower portion of the cylinder 10 of the first shock absorber 29, and, consequently, the upper portion of the housing 14. Another cylindrical element can be made in the form of a ring, or in the form of a round-cylindrical shell of short length, with open ends. The last specified cylindrical element encompasses, with attachment of, the lower portion of the housing 14.

The second shock absorber 23 is an element that provides the damping of vibrations due to the flow of a shock absorbing liquid 8, e.g. oil (gas can also be however used) through dedicated by-pass openings and/or compression valves. The second shock absorber 23 consists of a corresponding cylinder 10, whose cavity is filled with the shock absorbing liquid 8, a second piston 9, and a corresponding rod 12. The shock absorbing liquid 8 in accordance, for example, with GOST 23008-78 "Shock absorbing Liquid AZH-12T. Technical conditions" means a liquid (most often oil) used as a working fluid in shock absorbers.

The second piston 9 is a cylindrical part and is provided with by-pass openings with compression valves disposed therein. Each by-pass opening is closed by a corresponding compression valve. The compression valves being configured such that the resistance to the flow of the shock absorbing liquid 8 therethrough in one direction is greater than in the other direction. Thereby, the compression valves of the second piston 9 are disposed such that, when running over a protruding obstacle and the compression of the shock absorbing gas 5 in the first shock absorber 29, the shock absorbing liquid 8 flows through the compression valves with the least resistance. The second piston 9 is disposed inside the cylinder 10 and connected to one of the ends of the rod 12. The other end of the rod 12 is disposed outside the cylinder 10, can be disposed inside the housing 14, as specified above, and is connected to the cushioned element. The second shock absorber 23 is rigidly attached onto the axis 20, for example, by means of a bracket 11, in the same manner as specified above. Thereby, the second shock absorber 23 is oriented with the end of the rod 12, attached to the cushioned element, to the surface being travelled over.

The first shock absorber 29 and the second shock absorber 23 can be disposed on the same side or on different sides of the wheel portion 19. The first shock absorber 29 and the second shock absorber 23, when disposed on the same side, shall be disposed so as to minimize the asymmetry of the device design.

The cushioned element in the device in question is the frame portion, consisting of two footsteps 16 interconnected by means of the frame 13.

The frame 13, in this embodiment, is a metal U-shaped structure consisting of two side portions and a crossbar and encompassing the wheel portion 19 (the frame as a whole is a flat or spatial framework, whose elements are rigidly connected to each other in all or some of the nodes, see definition of the frame in Bol'shoy entsiklopedicheskiy slovar', article "Frame" https://gufo.me/dict/bes/PAMA accessed on October 23, 2017).

The side portions thereof can have the shape of an obtuse triangle. Each of the side portions consists of three successively connected, to form an obtuse triangle, metal pipes of any cross-section (for example, rectangular or round), as well as a support platform (the support platform, in this embodiment, is a further element that provides the convenience of connecting the frame 13, the footrest 16, and the rod 12 of each of the shock absorbers). The support platform is a metal part having the shape of parallelepiped. One of the vertices of the obtuse triangle (which is not the vertex of the obtuse angle) is reinforced and connected to the support platform. The side portions are interconnected by a crossbar.

The crossbar, in this embodiment, is a metal pipe of any cross-section (for example, rectangular or round). The crossbar interconnects one vertex from each of the obtuse triangles (vertexes that do not have support platforms attached thereto, and vertexes that are not vertexes of the obtuse angle).

A footrest 16 is attached to each of the side portions of the frame 13. The footrest 16 is an integral part of the body support system that serves to support the user's feet (see definition of a footrest in GOST R ISO 10535-2010, par. 3.13). The footrest 16, in this embodiment, is a flat metal part. Each footrest 16 is connected to corresponding support platform thereof by means of a pivoting axis.

The casing 15 is an element partially encompassing the wheel portion 19, and also protecting the user from contact with moving elements of the device (the housing is the main part of the product, which accommodates the parts of mechanism thereof, see the definition of housing in "Slovar' stroitel'noy terminologii", the article "Housing", https://gufo.me/dict/building_terms/ 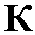 op 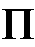 yc, accessed on October 31, 2017). Any device elements can be further disposed inside the casing 15, except for the footrests 16 and the control panel 4 (as the user shall directly interact with the footrests 16 and the control panel 4). The casing 15 consists of two side elements and a middle element. Each side element, in this embodiment, has a shape that is close to a circular segment. The side elements are interconnected by the middle element. The middle element with the edges thereof is connected or configured integral to the edges of the side elements, with the exception of the edges that are chords of circular segments. Thereby, each side element of the casing 15 is provided with a hole configured to attach the frame portions (when the first shock absorber 29 and the second shock absorber 23 are disposed inside the casing 15) to the rod 12 of the shock absorbers or configured to attach the shock absorbers to the axis 20 (when the shock absorbers are disposed outside the casing 15). Possible is an embodiment with no holes in the side elements of the casing 15, when the mutual disposition of the elements and the height of the segment defining the shape of the casing 15 are selected so that the connection point of the rod 12 of the shock absorbers to the frame portion is disposed on the side of the casing 15, where there is no middle element provided. The casing 15 with the side elements thereof is rigidly attached to the axis 20 such that the side elements are disposed vertically and oriented with the chords of circular segments downwards. Other forms of the casing 15 are also possible. In another embodiment, the side elements can be parallelogram- or U-shaped.

The following elements are attached to the casing 15: a handle 3, a control panel 4, a battery 7. The handle 3 is attached from the external side of the middle element (a handle in general is a part of the object by which it is held or taken by hand, see the definition of "handle" in "Malyy akademicheskiy slovar'", article "handle" https://gufo.me/dict/mas/py 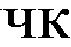 a, accessed on November 30, 2017). The control panel 4 is also attached on the external side of the middle element, in particular, near the location of the handle 3 (a control panel is a device that accommodates the controls of an electric unit and means for displaying information on the operation mode thereof, according to the definition of the control panel in GOST 20375-83 par. 32). The battery 7 is disposed inside the casing 15 such that it is not possible to damage it by moving elements of the device.

The control unit 2 is connected to a gyroscopic sensor 1, a position sensor, a control panel 4 and electromagnets 26. All elements that require energy for operation thereof are connected to the battery 7. All connections are typically made using wires, wherein the wires are disposed so as to prevent them from damage by moving parts of the device. Electrically connected the control unit 2, the control panel 4, the gyroscopic sensor 1, the electromagnets 26 and the battery 7 together form the electrical portion of the device.

### Brief description of the drawings

The invention is explained by a drawing, where the figure shows the general view of the device.

### Industrial applicability and embodiments of the invention

Provided the above elements and means are used, the invention is implemented as follows.

Almost all elements of the device are known and do not require special manufacturing, for example, the battery 7 is provided in the source https://gowheel.ru/akkumuljatory-dlja-monokoles/, the gyroscopic sensor 1 is provided in https://educube.ru/products/giroskopicheskiy-datchik-ev3/, https://gowheel.ru/zapchasti_monocolesa/Controller_M1/, the tire 17 is provided in https://gowheel.ru/zapchasti_monocolesa/tire_set/, the bearings 21 are provided in http://www.skf.com/ru/products/bearings-units-housings/product-tables/index.html, the footrests 16 are provided in https://ecodrift.ru/shop/pedali-kingsong-ks16/ (all the above links were accessed on November 16, 2017). Also known is a device that is an assembled wheel portion 19 without the tire 17 with installed electromagnets 26 and wires output through a hole in the axis 20 to further connect to the control unit 2 (https://sunwheel.ru/catalog/monokolesa/zapasnye-chasti/dvigatel-dlya-monokolesa.html, accessed on November 16, 2017).

The frame 13 of the above configuration (or other suitable configuration) is separately manufactured, for example, by welding pipe segments or rolling a suitable profile. Thereby, at the ends of the side portions of the frame 13, which are not connected by a crossbar, provided are elements that are configured to movably connect to the footrests 16. Further, the casing 15 of the required configuration with the handle 3 is pre-manufactured, for example, by casting from a polymer material. The casing 15 is typically configured detachable to simplify the assembly of the unicycle.

After preparing all the components, the unicycle is assembled. To this end, a hub 22 is rigidly attached onto the axis in the middle portion thereof, for example, by means of force fitting, glue or key connection. If necessary (for example, to increase the strength of the structure), a bushing can be further included between the hub 22 and the axis 20, wherein the relative immobility of the hub 22 and the axis 20 is further provided. The ring 24 is thereafter rigidly attached to the hub 22 with the necessary number of spokes 28 or a disk, wherein the connection of the ring 24 and each of the spokes 28 (or the disk) and the connection of the hub 22 and each of the spokes 28 (the disk) provide relative immobility of said elements. Using a disc instead of the spokes 28 simplifies the assembly process due to the fact that only one disc is required to secure the ring 24 to the hub 22, whereas at least three spokes 28 are required to secure the ring 24 to the hub 22. When the disk is used, more preferred is a disk with holes, as it reduces the material content of the device. The required number of electromagnets 26, each being a core with a winding, are thereafter rigidly attached onto the ring 24. The electromagnets 26 are typically disposed on the side of the ring 24, which faces away from the axis 20, to reduce losses when creating a magnetic field with the desired characteristics in the area of the disposition of the permanent magnets 27. The wires from the electromagnets 26 are disposed in the dedicated holes in the axis 20 such that the free ends thereof come out of the hole disposed along the axis 20. Further, the ring 24, the disc or spokes 28 can accommodate one or more of the following elements of the electrical portion: a control unit 2, a gyroscopic sensor 1, a position sensor, a battery 7. These elements of the electrical portion are interconnected (and, if necessary, connected to the electromagnets 26) by wires, as described above, and the wires are output in the same manner as those from the electromagnets 26. The required number of permanent magnets 27 are attached to the rim 25, typically on the side facing the axis 20, the poles of adjacent permanent magnets 27 being oriented in the opposite direction (one permanent magnet 27 is oriented with the north pole to the axis, and the adjacent ones are oriented with the north pole away from the axis). The rim 25 with the permanent magnets 27 is arranged such that it covers the ring 24 with the electromagnets 26 and is disposed with the ring 24 with the electromagnets 26 in the same (almost in the same) plane. Thereby, between the rim 25 with permanent magnets 27 and the ring 24 with the electromagnets 26 provided is a gap that permits the rim 25 with the permanent magnets 27 to rotate freely around the ring 24 with the electromagnets 26 and provides the required force of interaction between the electromagnets 26 and the permanent magnets 27. The bearings 21 installed in the covers 18 are attached on opposite sides of the hub 22 onto the axis 20. Each cover 18 along the corresponding edge is attached to the rim using, for example, screws. A tire 17 is thereafter put on the rim 25 and filled with compressed air. As a result, an assembled wheel portion 19 with installed electromagnets 26 is produced.

Further, the order of assembly depends on whether the shock absorbers and the frame 13 are disposed inside the casing 15 or outside the casing 15. Described below in detail is only the embodiment where both the shock absorbers and the frame 13 are disposed inside the casing 15.

The shock absorbers are rigidly attached to the axis 20, from opposite sides of the wheel portion 19 or from one side thereof, using, for example, brackets 11, as described above. Thereby, the shock absorbers are typically oriented in a position close to vertical, to ensure a minimum bend of the rods 12, i.e. vertically. Further, the shock absorbers are typically disposed such that the rods 12 are oriented to the surface being travelled over on the unicycle. Such position of the shock absorbers ensures that the footrests 16 are disposed closer to the surface being travelled over, as compared to an embodiment, where the rods 12 are oriented away from this surface. Accordingly, the user's center of gravity when on the unicycle is located closer to the surface, which fact provides greater stability.

A support platform is rigidly attached to the free end of each of the rods 12, the support platform being intended for attaching thereto the footrest 16 and the frame 13 with the side portion's end opposite to the crossbar. The support platform may be absent, then the frame 13 is attached to the rod 12. After attaching the frame 13 to the rods 12 directly or via the support platform, the frame 13 with the crossbar thereof can be oriented towards the direction movement (i.e. forward movement) or away from the direction of movement.

Elements of the electrical portion, which have not been installed, are thereafter disposed inside the casing 15, wherein all of the elements must be disposed such that no damage is possible by the rotating rim 25 with the tire 17, and the control panel 4 shall further be disposed in an area where the user can interact therewith. It should be noted that a particular disposition of the elements of the electrical portion, with the exception of the electromagnets 26 and the control panel 4, is not critical provided that they are rigidly disposed relative to the axis 20. All elements of the electrical portion are electrically interconnected as described above, and all of the wires are disposed such that no damage thereto is possible by the rotating rim 25 with the tire 17. The casing 15 with the handle 3 is thereafter rigidly attached onto the axis 20 such that the wheel portion 19 with the installed electromagnets 26, the shock absorbers and the frame 13 is partially disposed inside the casing 15. Finally, the footrests 16 are attached to the frame 13, rods 12 or support platforms. Each footrest 16 is attached such that the footrest 16 is configured to be in two positions (parallel to the axis and perpendicular to the axis) using, for example, a rod that enables the rotation of the footrest 16. Thereby, the frame 13 provides a rigid attachment of the footrests 16 to each other, which fact has a positive effect on the unicycle's controllability.

When the shock absorbers and the frame 13 are disposed inside the casing 15, the safety of using the unicycle increases as a result of a reduced number of elements that the user can contact with (for example, the possibility of the user's clothing catching on the elements is eliminated). When the frame 13 is disposed outside the casing 15, the passing ability of the unicycle increases due to the fact that the frame 13 allows the user on the unicycle to travel over higher obstacles.

The unicycle is used as follows. The rotation of the rim 25 with the tire 17 and the permanent magnets 27 around the axis 20 is provided by the interaction of the magnetic fields of the permanent magnets 27 and the electromagnets 26 when an electric current flows from the battery 7 via the electromagnets 26. Thereby, the value and direction of the electrical current is determined by the relative position of the movable portion and the stationary portion, as determined by the position sensor, and the position of the unicycle in space, which is determined by the gyroscopic sensor 1 (or by a plurality of gyroscopic sensors). Signals with data about said positions are sent from the gyroscopic sensor 1 and from the position sensor to the control unit 2, which in turn sends the control signal to the electromagnets 26. Using this principle of transmitting the rotation to the rim 25 with the tire 17 is more preferable than that using rotating rollers between the rim 25 and the ring 24, as a lower sensitivity to foreign microparticles, and therefore greater reliability, are provided.

The travelling of the unicycle over the surface is provided by the contact of the tire 17 with the surface and the rotation of the rim 25 with the tire 17 and the permanent magnets 27 around the axis 20. The unicycle when being operated is turned by tilting the unicycle to the side, said tilting being caused by the redistribution of the user's weight between the footrests 16. When moving, the user stands on the footrests 16. However, the user can use the device in any other convenient position, such as a sitting position. Thereby, appropriate additional elements, such as a seat, are added to the device design. When the user travels on the unicycle over an uneven surface, provided is the damping (decrease in the amplitude) of mechanical vibrations, which occur as a result of travelling over an uneven surface, and which are transmitted from the wheel portion 19 to the footrests 16. This is due to the fact that the footrests 16 are connected to the axis 20 of the wheel portion 19 not directly, but via the shock absorbers, whose damping of oscillations is achieved by varying the volume of the shock absorbing gas 5 and the flow of the shock absorbing liquid 8. Thereby, the footrests 16 are rigidly connected to each other by the frame 13, due to which fact maintained is the same controllability of the unicycle when turning, as compared to one without the shock absorbers. If the frame 13 is absent, then the relative similar position of the footrests 16 is not provided, and, accordingly, the tilt of the unicycle does not clearly correspond to the weight redistribution that is provided by the user.

Thus, the presence of the first shock absorber 29 and the second shock absorber 23, which connect the axis 20 of the wheel portion 19 with footrests 16, and frame 13, which rigidly connects the footrests 16, enables increased safety of the use of the unicycle. This is due to the fact that the first shock absorber 29 and the second shock absorber 23 damp the oscillations occurring when travelling on the unicycle over uneven surfaces, while maintaining the controllability of the unicycle due to the rigid connection of the footrests 16, thereby reducing the probability of falling of the user. Further increase in safety is provided by installing the shock absorbers such that the rods 12 are oriented to the surface being travelled over. The reasons for this are as follows. In one respect, in the case of such installation of the shock absorbers, the footrests 16 which support the user are located closer to the surface, i.e. the center of gravity of the user on the unicycle is also located closer to the surface, therefore, the stability and safety of the user on the unicycle are increased.

## Claims

1. A unicycle comprising a wheel portion (19), an electrical portion, a first shock absorber (29), a second shock absorber (23), a frame portion and a casing (15), the first shock absorber (29) comprising a cylinder (10) corresponding to the first shock absorber, a rod (12) corresponding to the first shock absorber, and a first piston (6), the second shock absorber (23) comprising a cylinder (10) corresponding to the second shock absorber, a rod (12) corresponding to the second shock absorber, and a second piston (9), each of the cylinders being provided with a cavity plugged from both ends thereof, the first piston being installed in the cylinder cavity of the first shock absorber, and the second piston being installed in the cylinder cavity of the second shock absorber, the corresponding rod with one end thereof being connected to the first piston, and the other corresponding rod with one end thereof being connected to the second piston, the other end of each of the rods being disposed outside the cylinder corresponding thereto, **characterized by** the wheel portion (19) comprising an axis (20), a hub (22), a ring (24), a rim (25) with permanent magnets (27), a tire (17), two covers (18), and two bearings (21), the electrical portion comprising a control unit (2), a control panel (4), a battery (7), electromagnets (26), a gyroscopic sensor (1) and a position sensor, the frame portion comprising a frame (13) comprising a crossbar and two side portions, and two footrests (16), wherein the hub is attached onto the axis and rigidly connected to the ring, which is installed inside the rim with a gap therefrom, the axis, hub, ring, rim and bearings are installed coaxially, and the tire is disposed on the rim, the covers are attached to the axis from opposite sides of the hub by means of the two bearings and are attached to the rim, wherein the control unit is electrically connected to the control panel, electromagnets, battery, gyroscopic sensor and position sensor, the electromagnets are disposed on the ring, the gyroscopic sensor is disposed stationary relative to the casing, and the position sensor is attached to the ring and configured to determine the position of the rim relative to the ring, wherein a portion of the cylinder cavity of the first shock absorber, disposed on the side of the rod thereof, is filled with shock absorbing gas, and a portion of the cylinder cavity of the second shock absorber, disposed on the side of the rod thereof, is filled with shock absorbing liquid, wherein the second piston is configured to pass the flow of shock absorbing liquid, each of the cylinders is attached rigidly relative to the axis, and each rod is connected to the frame portion, the side portions are disposed on opposite sides of the wheel portion and from one side thereof are connected to each other by the crossbar, and from the other side, each of them is connected to the corresponding footrest thereof, wherein the casing is rigidly attached to the axis and partially encompasses the wheel portion.

2. The unicycle according to claim 1, **characterized in that** the hub (22) is rigidly connected to the ring (24) by means of spokes (28).

3. The unicycle according to claim 1, **characterized in that** the hub (22) is rigidly connected to the ring (24) by means of a disk disposed coaxially to the axis.

4. The unicycle according to claim 3, **characterized in that** the disk is made solid.

5. The unicycle according to claim 3, **characterized in that** the disk is made with holes.

6. The unicycle according to claim 1, **characterized in that** the first shock absorber (29) and the second shock absorber (23) are disposed such that the rods are oriented towards the surface being travelled over.

7. The unicycle according to claim 1, **characterized in that** the first shock absorber (29) and the second shock absorber (23) are disposed such that the rods are oriented away from the surface being travelled over.

8. The unicycle according to claim 1, **characterized in that** the frame (13), the first shock absorber (29) and the second shock absorber (23) are disposed inside the casing.

9. The unicycle according to claim 1, **characterized in that** the frame (13) is disposed outside the casing (15), and the first shock absorber (29) and the second shock absorber (23) are disposed inside the casing (15).

10. The unicycle according to claim 1, **characterized in that** the frame (13), the first shock absorber (29) and the second shock absorber (23) are disposed outside the casing (15).

## Patentansprüche

1. Ein Einrad, das aus dem Radteil (19), dem elektrischen Teil, dem ersten Stoßdämpfer (29), dem Rahmenteil und dem Gehäuse (15) besteht, wobei der erste Stoßdämpfer (29) einen Zylinder (10), der dem ersten Stoßdämpfer entspricht, eine Stange (12), die dem ersten Stoßdämpfer entspricht, und den ersten Kolben (6) enthält, und der zweite Stoßdämpfer (23) einen Zylinder (10), der dem zweiten Stoßdmäpfer entspricht, und einen zweiten Kolben (9) enthält, und jeder Zylinder mit einem Hohlraum versehen ist, welcher an beiden Enden verstopft ist, der erste Kolben wird in das Loch des ersten Stoßdämpfers und der zweite Kolben in das Loch des Zylinders des zweiten Stoßdämpfers eingebaut, die entsprechende Stange ist mit einem ihrem Ende mit dem ersten Kolben und die zweite entsprechende Stange ist mit einem ihren Ende mit dem zweiten Kolben verbunden, während das andere Ende jeder Stange außerhalb des entsprechenden Zylinders positioniert ist, charakterisiert durch den Radteil (19), der aus der Achse (20), der Nabe (22), dem Ring (24), der Felge (25) mit Dauermagneten (27), dem Reifen (17), zwei Deckeln (18) und zwei Lagern (21) besteht, der elektrische Teil aus der Kontrolleinheit (2), dem Kontrollpanel (4), der Batterie (7), dem Elektromagnet (26), dem gyroskopischen Sensor (1)und Positionssensor besteht, der Rahmenteil aus dem Rahmen (13), bestehend aus der Querlatte und zwei seitlichen Teilen und zwei Fußstützen (16), besteht, wobei die Nabe an die Achse befestigt und mit dem Ring fest verbunden ist, welcher in den Radkranz mit einem Spalt eingebaut ist, die Achse, die Nabe, der Ring, die Felge und die Lager koaxial installiert sind und der Reifen auf die Felge eingebaut ist, die Deckel mit der Achse an verschiedene Seiten der Nabe mit zwei Lagern an die Felge befestigt sind, wobei die Kontrolleinheit mit dem Kontrollpanel, den Elektromagneten, der Batterie, dem gyroskopischen Sensor und dem Positionssensor elektrisch verbunden ist, die Elektromagneten auf den Ring und der gyroskopische Sensor stationär im Verhältnis zum Gehäuse positioniert sind, und der Positionssensor mit dem Ring verbunden und so konfiguriert ist, die Position der Felge im Verhältnis zum Ring zu bestimmen, wobei ein Teil des Hohlraums des Zylinders des ersten Stoßdämpfers, installiert an der Seite seiner Stange, mit schockabsorbierendem Gas gefüllt ist, und ein Teil des Hohlraums des Zylinders des zweiten Stoßdämpfers, installiert an der Seite seiner Stange, mit schockabsorbierender Flüssigkeit gefüllt ist, wobei der zweite Kolben konfiguriert ist, die schockabsorbierende Flüssigkeit durchzuzlassen, beide Zylinder mit der Achse fest verbunden sind, und jede Stange mit dem Rahmenteil verbunden ist, die seitlichen Teile an verschiedenen Seiten des Radteiles positioniert und auf einer Seite mit einer Querlatte verbunden sind, und auf der anderen Seite ist jeder von ihnen mit seiner entsprechenden Fußstütze verbunden, wobei das Gehäuse mit der Achse fest verbunden ist und teilweise den Radteil umfasst.

2. Ein Einrad aufgrund der Anforderung 1, charakterisiert dadurch, dass die Nabe (22) mit dem Ring (24) mit Speichen (28) fest verbunden ist.

3. Ein Einrad aufgrund der Anforderung 1, charakterisiert dadurch, dass die Nabe (22) mit dem Ring (24) mit einer Radscheibe fest verbunden ist, welcher auf die Achse koaxial positioniert ist.

4. Ein Einrad aufgrund der Anforderung 3, charakterisiert dadurch, dass die Radscheibe solide ausgeführt ist.

5. Ein Einrad aufgrund der Anforderung 3, charakterisiert dadurch, dass die Radscheibe mit Öffnungen ausgeführt ist.

6. Ein Einrad aufgrund der Anforderung 1, charakterisiert dadurch, dass der erste Stoßdämpfer (29) und der zweite Stoßdämpfer (23) so positioniert sind, dass die Stangen in Richtung der Bewegungsfäche orientiert sind.

7. Ein Einrad aufgrund der Anforderung 1, charakterisiert dadurch, dass der erste Stoßdämpfer (29) und der zweite Stoßdämpfer (23) so positioniert sind, dass die Stangen in die entgegengesetzte Richtung von der Bewegungsfläche orientiert sind.

8. Ein Einrad aufgrund der Anforderung 1, charakterisiert dadurch, dass der Rahmen (13), der erste Stoßdämpfer (29) und der zweite Stoßdämpfer (23) innerhalb des Gehäuses positioniert sind.

9. Ein Einrad aufgrund der Anforderung 1, charakterisiert dadurch, dass der Rahmen (13) außerhalb des Gehäuses (15) positioniert ist, und der erste Stoßdämpfer (29) und der zweite Stoßdämpfer (23) innerhalb des Gehäuses (15) positioniert sind.

10. Ein Einrad aufgrund der Anforderung 1, charakterisiert dadurch, dass der Rahmen (13), der erste Stoßdämpfer (29) und der zweite Stoßdämpfer (23) außerhalb des Gehäuses (15) positioniert sind.

## Revendications

1. Un monocycle composé d'une partie roue (19), d'une partie électrique, d'un premier amortisseur (29), d'un second amortisseur (23), d'une partie cadre et boîtier (15), d'un premier amortisseur (29) contenant un cylindre (10) correspondant au premier amortisseur, la tige (12) correspondant au premier amortisseur et au premier piston (6), le deuxième amortisseur (23) contenant le cylindre (10) correspondant au deuxième amortisseur, la tige (12) correspondant au second amortisseur, et le second piston (9), chacun des cylindres étant muni d'une cavité bouchée à ses deux extrémités, le premier piston est installé dans la cavité du cylindre du premier amortisseur, tandis que le deuxième piston est installé dans la cavité du cylindre du deuxième amortisseur, la tige correspondante est reliée à une extrémité du premier piston, et la deuxième tige correspondante est reliée à une extrémité du deuxième piston, tandis que l'autre extrémité de chacune des tiges est placée à l'extérieur du cylindre lui correspondant, **caractérisé par** une partie de la roue (19) constituant d'un axe (20), d'un moyeu (22), d'une couronne (24), une jante (25) à aimants permanents (27), un pneumatique (17), deux capots (18), et deux roulements (21), une partie électrique constituée d'une unité de commande (2), tableau de commande (4), une batterie (7), un électroaimant (26), un capteur gyroscopique (1) et un capteur de position, faisant partie d'un châssis, lui-même constitué d'un cadre (13) englobant une traverse et deux parties latérales et aussi bien deux repose-pieds (16 ), le moyeu étant fixé à l'arbre et solidement relié à une bague, qui est installée à l'intérieur de la jante avec un espace autour de celle-ci, l'arbre, le moyeu, la bague, la jante et les roulements sont montés d'une minière coaxiale, et le pneu est monté sur la jante, les couvercles sont fixés à l'arbre des côtés opposés du moyeu par deux roulements et les mêmes sont fixés à la jante, l'unité de commande est électriquement connectée au panneau de commande, aux électroaimants, à la batterie, au capteur gyroscopique, ainsi qu'au capteur de position, les électroaimants sont montés sur l'anneau, le capteur gyroscopique est monté d'une manière stationnaire par rapport au boîtier, et le capteur de position est fixé à l'anneau et configuré pour être en mesure de déterminer la position de la jante par rapport à l'anneau, une partie de la cavité cylindrique du premier amortisseur, placée sur le côté de sa tige, est remplie du gaz amortisseur du choc, et une partie de la cavité cylindrique du deuxième amortisseur, placée du côté de sa tige, est remplie d'un fluide amortisseur du choc, le deuxième piston étant configuré pour laisser passer un écoulement de fluide amortisseur du choc, chacun des cylindres est solidement fixé à l'essieu, et chaque tige est reliée à une partie du cadre, les parties latérales sont disposées sur des côtés opposés de la partie roue et sont reliées les unes aux autres d'un côté par une barre transversale, et de l'autre côté, chacun d'eux est relié à son support respectif pour les pieds, le boîtier étant fixé d'une manière fixe à l'essieu, renfermant partiellement une partie de la roue.

2. Monocycle selon la demande 1 est **caractérisé par le fait que** le moyeu (22) est relié d'une manière rigide à l'anneau (24) au moyen de dents (28).

3. Monocycle selon la demande 1 est **caractérisé par** le fait le moyeu (22) est relié rigidement à l'anneau (24) moyennant un disque monté sur l'essieu d'une manière coaxiale.

4. Monocycle selon la demande 3 est **caractérisé par le fait que** le disque est réalisé plein.

5. Monocycle selon la demande 3 est **caractérisé par le fait que** le disque est réalisé avec des ouvertures

6. Monocycle selon la demande 1 est **caractérisé par le fait que** le premier amortisseur (29) et le second amortisseur (23) sont arrangés pour que les tiges soient orientées vers la surface sur laquelle elles se mettent en mouvement.

7. Monocycle selon la demande 1 est **caractérisé par le fait que** le premier amortisseur (29) et le deuxième amortisseur (23) sont arrangés de la manière que les tiges soient orientées loin de la surface sur laquelle elles se mettent en mouvement.

8. Monocycle selon la demande 1 est **caractérisé par le fait que** le châssis (13), le premier amortisseur (29) et le second amortisseur (23) sont situés à l'intérieur du boîtier.

9. Monocycle selon la demande 1 est **caractérisé par le fait que** le châssis (13) est placé à l'extérieur du boîtier (15), tandis que le premier amortisseur (29) et le deuxième amortisseur (23) sont situés à l'intérieur du boîtier (15).

10. Monocycle selon la demande 1 est **caractérisé par** fait que le châssis (13), le premier amortisseur (29) et le deuxième amortisseur (23) sont placés à l'extérieur du boîtier (15).
